Europäisches Patentamt

European Patent Office

Office européen des brevets

(19)

(11) Veröffentlichungsnummer: **0 163 265**
**B1**

(12) **EUROPÄISCHE PATENTSCHRIFT**

(45) Veröffentlichungstag der Patentschrift:
**15.11.89**

(21) Anmeldenummer: **85106357.8**

(22) Anmeldetag: **23.05.85**

(51) Int. Cl.⁴: **D 06 F 58/20**

(54) **Trommeltrockner für Wäsche.**

(30) Priorität: **26.05.84 DE 3419743**

(43) Veröffentlichungstag der Anmeldung:
**04.12.85 Patentblatt 85/49**

(45) Bekanntmachung des Hinweises auf die Patenterteilung:
**15.11.89 Patentblatt 89/46**

(84) Benannte Vertragsstaaten:
**BE FR IT NL SE**

(56) Entgegenhaltungen:
**DD-A-155 625**
**DE-A-2 524 069**
**DE-A-2 914 859**
**DE-A-3 202 586**
**DE-U-7 436 443**
**FR-A-2 517 040**
**FR-A-2 526 454**
**GB-A-2 075 559**

(73) Patentinhaber: **Miele & Cie. GmbH & Co., Carl-Miele- Strasse, D-4830 Gütersloh 1 (DE)**

(72) Erfinder: **Der Erfinder hat auf seine Nennung verzichtet**

EP 0 163 265 B1

**Beschreibung**

Die Erfindung bezieht sich auf einen Wäschetrockner mit einer im Maschinengehäuse gelagerten Wäschetrommel, die von einem elektrischen Antriebsmotor angetrieben wird und mit einem im Gehäuse untergebrachten Gebläseaggregat, welches die Prozeßluft durch den Trockner fördert sowie einer auf der Außenseite der Rückwand des Trockners angeordneten, die Prozeßluft aufheizenden Heizvorrichtung.

Aus der DD-A-155 625 ist ein Wäschetrockner bekannt, bei dem ein im Gehäuse angeordnetes Gebläseaggregat die Prozeßluft durch den Trockner fördert und wobei die die Prozeßluft aufheizende Heizvorrichtung auf der Außenseite der Rückwand des Trockners angeordnet ist. Bei dieser bekannten Ausführung sind Zuluftanschluß und Abluftanschluß so ausgebildet, daß keine Zusatzaggregate zwischengeschaltet werden können. Der Wäschetrockner kann nur im Abluftbetrieb eingesetzt werden. Besonders nachteilig ist dabei, daß dieser Ablufttrockner nicht mit einfachen Mitteln auf eine andere Betriebsart umgestellt werden kann.

Aus dem DE-GM-6 921 184 ist ein Trommeltrockner bekannt, bei dem auf der Rückseite des Gerätes Zusatzeinrichtungen angebracht sind. Dieser Trockner soll dadurch an unterschiedliche Arbeitsweisen angepaßt werden, und es soll dabei ein kompakter Aufbau erhalten bleiben. Ein Nachteil der in dem Gebrauchsmuster beschriebenen Ausführungsform besteht jedoch darin, daß die angebrachten Zusatzeinrichtungen in der Tiefe des Trockners hintereinander geordnet sind, wodurch einmal sehr viel Platz zur Aufstellung des Gerätes benötigt wird und zum anderen bleiben dadurch die Variationsmöglichkeiten des Trockners begrenzt.

Ein weiterer Nachteil besteht darin, daß die vorhandene Zusatzeinrichtung nicht gegen eine andere Zusatzeinrichtung ausgetauscht werden kann. Ebenso wenig kann der Trockner bei Entfernen der Zusatzeinrichtung als einfacher Ablufttrockner eingesetzt werden.

Der Erfindung liegt deshalb die Aufgabe zugrunde, einen Trockner der eingangs genannten Art zu schaffen, bei dem ein Gehäusekonzept angeboten wird, welches es in einfacher Weise gestattet, den Trockner modulweise auf unterschiedliche Betriebsmöglichkeiten umzurüsten.

Die Lösung dieser Aufgabe wird durch die im Hauptanspruch gekennzeichneten Merkmale erzielt. Weitere Ausgestaltungen und Merkmale der Erfindung ergeben sich aus den nachfolgenden Unteransprüchen.

Durch die neue Gehäusekonzeption ergibt sich der Vorteil, daß man fertigungstechnisch im einfachsten Fall ein Gehäuse auf der Grundlage eines Ablufttrockners bereithalten kann, welches dann je nach Bedarf auf unterschiedliche Betriebsweisen durch entsprechende Zusatzteile wie Kondensationseinrichtung, Rezirkulations-Luftführung, Wärmerückgewinnungseinrichtung und Wärmepumpenaggregat und dgl. erweitert werden kann. Die Anschlußmöglichkeiten für die Zu- und Abluft des Trockners sind dabei so plaziert, daß die Zusatzeinrichtungen in einfacher weise und mit wenigen Handgriffen anschließbar sind. Zusätzliche Vorteile ergeben sich auch für den Benutzer, da dieser je nach Bedarf und seinen Wünschen den Trockner zu jeder Zeit mit entsprechenden Zusatzteilen umrüsten oder erweitern kann. Diese Vorteile kommen insbesondere dem Einsatz gewerblichen Bereich zugute. Ausführungsbeispiele der Erfindung sind in den Zeichnungen rein schematisch dargestellt. Es zeigen:

Fig. 1    in vereinfachter Form einen Ablufttrockner von der Seite im Schnitt,

Fig. 2    einen Wäschetrockner mit einem Rezirkulationsteil von der Seite im Schnitt,

Fig. 3    einen Wäschetrockner mit einem Luftkondensationsteil von der Seite im Schnitt,

Fig. 4    einen Wäschetrockner mit einem Wärmerückgewinnungsteil von der Seite im Schnitt,

Fig. 5    einen Wäschetrockner mit einem Wärmepumpenaggregat von der Seite im Schnitt und

Fig. 6   ein Prinzipschaltbild einer Luftleitsteuerung.

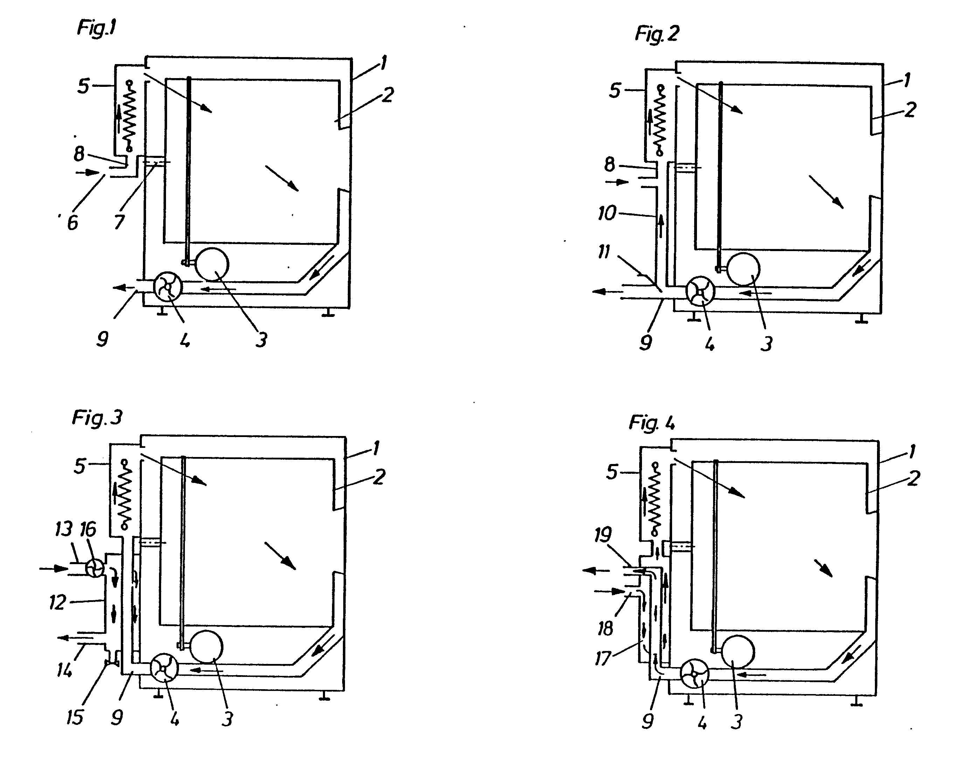

Aus der Figur 1 ergibt sich das Grundkonzept für den variierbaren Wäschetrockner. In dem Gehäuse 1 ist die Wäschetrommel 2 wie üblich drehbar gelagert und sie wird von einem elektrischen Antriebsmotor 3 angetrieben. Unterhalb der Wäschetrommel 2 befindet sich in Bodennähe des Trockners das Gebläse 4, welches die Prozeßluft entsprechend der Pfeilrichtung durch den Trockner fördert.

Auf der Rückseite des Gehäuses 1 ist im oberen Bereich des Trockners das Heizregister 5 angebracht. Über die Lufteintrittsöffnung 6 gelangt die im Heizregister 5 erwärmte Luft in das Innere des Wäschetrockners. Vorteilhafterweise ist das Heizregister 5 oberhalb der hinteren Trommellagerstelle 7 angeordnet. Im Lufteintrittsbereich des Heizregisters 5 befindet sich ein Luftanschlußstutzen 8.

Im unteren Bereich des Gehäuses 1 ist ein Anschlußstutzen 9 für die Abluft angeordnet. Vorzugsweise ist dieser Abluftausgang auch nach hinten aus dem Trocknergehäuse gerichtet. Daneben wäre aber auch die übliche Verzweigung zu seitlichen Abluftausgängen möglich.

Der in der Figur 1 dargestellte Trockner wäre in dieser Version als einfacher Ablufttrockner einsatzfähig.

In der Figur 2 ist zusätzlich zu dem vorbeschriebenen Aufbau zwischen den Zuluftanschlußstutzen 8 und den Abluftanschlußstutzen 9 ein Rezirkulationsteil 10 zwischengeschaltet. In dem Rezirkulationsteil 10 befindet sich eine Luftsteuereinrichtung 11, wodurch das Zu- und Abluftverhältnis des Trockners variiert werden kann. Dies kann - wie gezeigt - manuell von außen durch einen Stellhebel geschehen, andererseits wäre aber auch die prozeßabhängige Steuerung in Verbindung mit der Trocknersteuerung möglich. Die direkt abgehenden Zuluft- und Abluftanschlußstutzen sind bei dieser Ausführung am Rezirkulationsteil angeordnet.

In einer weiteren Variante nach der Figur 3 ist das Grundmodell des Wäschetrockners um ein Luftkondensationsteil 12 erweitert. Das Luftkondensationsteil 12 besitzt Anschlußstutzen 13 und 14 für die Kühlluftführung. Weiterhin ist ein Kondensatablauf 15 vorgesehen. Im Inneren des Luftkondensationsteils 12 ist gleichzeitig das Kühlluftgebläse 16 integriert. Natürlich wäre es auch möglich, das Luftkondensationsteil 12 mit einem integriertem Kondensatauffangbehälter oder einer Kondensatförderpumpe auszurüsten. In gleicher Weise könnte ein wassergekühltes Kondensationsteil Verwendung finden.

In der Ausführung nach Figur 4 ist zwischen dem Heizregister 5 und dem Abluftanschluß 9 ein Wärmerückgewinnungsteil 17 zwischengeschaltet, bei dem die über den Anschlußstutzen 18 zugeführte Frischluft durch die über den Anschlußstutzen 19 ausgeblasene Abluft erwärmt wird. Gleichzeitig ließe sich hier zusätzlich eine Rezirkulationseinrichtung (wie Fig. 2) integrieren.

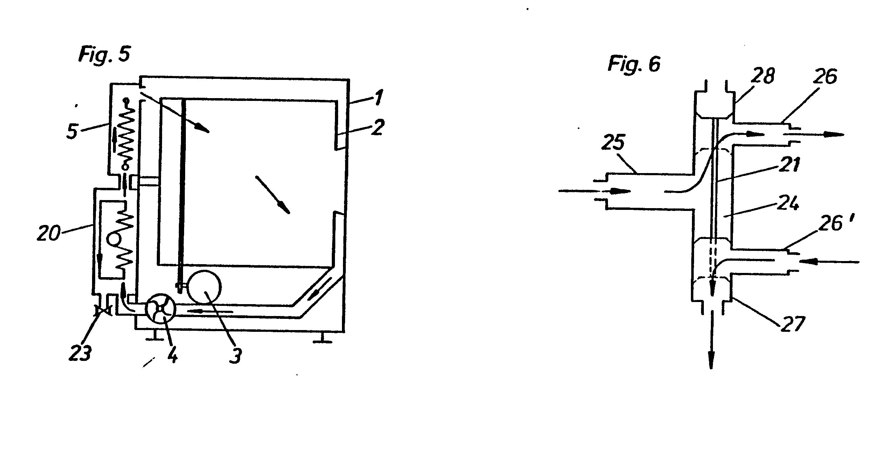

Letztlich zeigt die in der Figur 5 dargestellte Version einen Wäschetrockner mit einem Wärmepumpenteil 20, welches zur Unterstützung des Heiz- und Kühlprozesses eingesetzt ist. Hierbei ist das Wärmepumpenteil mit den üblichen Aggregaten wie Verdampfer, Verflüssiger und Verdichter sowie mit einem Kondensatablauf 23 versehen. Natürlich wäre auch hier die Integration einer Wärmerückgewinnungseinrichtung und einer Kondensatpumpe innerhalb des Wärmepumpenteils 20 möglich.

Bei allen vorbeschriebenen Ausführungsvarianten wäre noch eine Erweiterung dahin möglich, daß an den Zusatzeinrichtungen gleichzeitig noch eine Luftleitsteuerung 24 angeschlossen oder mit den Zusatzeinrichtungen integriert werden kann, wodurch sich die Möglichkeit einer Winter-Sommer-Umschaltung ergibt. In der Figur 6 ist eine derartige Luftleitsteuerung 24 dargestellt. In der mit durchgezogenen Linien dargestellten Stellung des Stellschiebers 21 erhält man den Winterbetrieb. Über den Anschlußstutzen 25 wird kalte Luft von außen zugeführt und über den Anschluß 26 in den Trockner geleitet. Die warme Abluft des Trockners gelangt über die Anschlußstutzen 26' und 27 in den Aufstellungsraum und trägt hier zur Erwärmung der Raumluft bei.

In der gestrichelt gezeichneten Stellung der Luftleitsteuerung ergibt sich dann der Sommerbetrieb, bei dem die Luft über den Anschluß 28 dem Aufstellungsraum entnommen wird und anschließend nach draußen geführt wird, so daß hier eine Kühlung der Raumluft bewirkt werden kann.

## Patentansprüche

1. Wäschetrockner mit einer im Maschinengehäuse gelagerten Wäschetrommel, die von einem elektrischen Antriebsmotor angetrieben wird und mit einem im Gehäuse untergebrachten Gebläseaggregat, welches die Prozeßluft durch den Trockner fördert sowie mit einer die Prozeßluft aufheizenden Heizvorrichtung, die auf der Außenseite im Bereich der Rückwand des Trockners angeordnet ist, und wobei der Wäschetrockner im Bereich der Rückwand eine Zuluftöffnung sowie eine nach hinten oder seitlich abgehende Abluftöffnung aufweist,
dadurch gekennzeichnet,
daß die Heizvorrichtung im oberen Bereich der Rückwand angeordnet ist und wobei die Zuluftöffnung als Zuluftanschluß an der Heizvorrichtung ausgebildet ist und daß im unteren Bereich des Trockners ein nach hinten oder seitlich abgehender Abluftanschluß angebracht ist, und daß zwischen Zuluftanschluß der Heizvorrichtung und Abluftanschluß Zusatzaggregate zuschaltbar angeordnet sind.

2. Wäschetrockner nach Anspruch 1,
dadurch gekennzeichnet,
daß zwischen Heizaggregat (5) und Abluftanschluß (9) ein Rezirkulationsteil (10) zwischengeschaltet ist, mit dem das Abluft-/Umluftverhältnis variierbar ist und daß diese Luftsteuereinrichtung (11) von außen manuell oder prozeßabhängig von der Trocknersteuerung steuerbar ausgebildet ist.

3. Wäschetrockner nach Anspruch 1
dadurch gekennzeichnet,
daß zwischen Heizaggregat (5) und Abluftanschluß (9) eine Kondensationseinrichtung zwischengeschaltet ist.

4. Wäschetrockner nach Anspruch 1 und 3,
dadurch gekennzeichnet,
daß als Kondensationseinrichtung ein Luftkondensationsteil (12) mit einem integrierten Kühlluftgebläse (16) und Kondensatablauf (15) oder Kondensatauffangbehälter vorgesehen ist.

5. Wäschetrockner nach Anspruch 1 und 3,
dadurch gekennzeichnet,
daß ein Wasserkondensationsteil mit steuerbarem Wasserzulauf sowie Wasser- und Kondensatablauf vorgesehen ist.

6. Wäschetrockner nach Anspruch 1
dadurch gekennzeichnet,
daß zwischen Heizaggregat (5) und Abluftanschluß (9) ein Wärmerückgewinnungsteil (12) zwischengeschaltet ist, welches den Wärmeinhalt der Abluft für die Zuluft ausnutzt.

7. Wäschetrockner nach Anspruch 1 und 6,
dadurch gekennzeichnet,
daß im Wärmerückgewinnungsteil (12) eine Rezirkulationseinrichtung integriert ist.

8. Wäschetrockner nach Anspruch 1,
dadurch gekennzeichnet,
daß zwischen Heizaggregat (5) und Abluftanschluß (9) ein Wärmepumpenteil (20) zwischengeschaltet ist und daß das Wärmepumpenteil (20) zusätzlich eine Kondensatpumpe aufweist.

9. Wäschetrockner nach einem der Ansprüche 1 bis 8,

dadurch gekennzeichnet,

daß den Zusatzaggregaten eine Luftleitsteuerung (24) zuschaltbar oder mit diesen integriert ausgeführt ist, durch die die Umschaltung von Winter- und Sommerbetrieb durchgeführt werden kann und daß die Luftleitsteuerung (24) Anschlußstutzen (26, 26') für die Zu- und Abluftführung des Wäschetrockners, einen nach außen führenden Luftanschlußstutzen (25) und mindestens einen in den Aufstellungsraum des Trockners führenden Anschlußstutzen (27, 28) aufweist.

10. Wäschetrockner nach einem der Ansprüche 1 bis 9,

dadurch gekennzeichnet,

daß der am Heizaggregat (5) vorgesehene Zuluftanschluß (8) nach unten, seitlich oder nach hinten gerichtet ist.

## Claims

1. Tumble dryer consisting of a drum housed within an appliance casing and driven by an electric motor, a fan unit to convey process air through the dryer, and a device with which the process air is heated up, characterised in that the heater is situated in the upper reaches of the rear panel, and in that the tumble dryer is provided with both an air inlet port in its rear panel and a vent connection for discharged air to the rear or to the side, whereby the inlet port constitutes the air inlet for the heater, and in that additional, individually controlled units can be added between the air inlet connection on the heater and the vent connection.

2. Tumble dryer according to claim 1, characterised in that a recirculation unit (10), with which the ratio of recirculated and discharged air can be regulated, is installed between the heater unit (5) and the vent connection (9), and in that the air control device (11) can be operated manually from the outside or in a process-bound manner by the dryer controls.

3. Tumble dryer according to claim 1, characterised in that a condenser unit is fitted between the heater (5) and the vent connection (9).

4. Tumble dryer according to claims 1 and 3, characterised in that the condenser unit comprises an air condenser (12) with an integrated cooling fan (16) and a condensate drain (15) or condensate reservoir.

5. Tumble dryer according to claims 1 and 3, characterised in that a water condenser with a water and condensate drain is included, whereby the intake of water can be regulated.

6. Tumble dryer according to claim 1, characterised in that a heat recovery unit (12) situated between the heater (5) and the vent connection (9) is included, whereby the heat content of the discharged air is utilised to pre-heat the air taken in at the air inlet port.

7. Tumble dryer according to claims 1 and 6, characterised in that a recirculation device is incorporated in the heat exchanger (12).

8. Tumble dryer according to claim 1, characterised in that a heat pump (20) combined with a condensate drain pump is included between the heater (5) and the vent connection (9).

9. Tumble dryer according to claims 1 to 8, characterised in that the additional units are supplemented by or integrated into an air-flow deflection system (24), permitting a change-over from summer to winter operation and vice versa, and in that the deflection system (24) is connected to the inlet and vent connections (26, 16') and has an outlet duct to atmosphere (25) and at least one outlet through which air is discharged into the room in which the machine is installed (27, 28).

10. Tumble dryer according to claims 1 to 9, characterised in that air inlet connection (8) at the heater (5) points downwards, towards the rear or the side.

## Revendications

1. Séchoir à linge comprenant un tambour à linge qui est monté tournant dans le caisson de la machine et qui est entraîné par un moteur électrique d'entraînement, et comprenant un bloc de soufflage qui est logé dans le caisson et qui déplace l'air de traitement à travers le séchoir, et comprenant aussi un dispositif de chauffage pour chauffer l'air de traitement, lequel est disposé sur la face extérieure du séchoir dans la région de sa paroi arrière, le séchoir à linge présentant dans la région de la paroi arrière une ouverture d'amenée d'air, ainsi qu'une ouverture de sortie d'air qui se dirige vers l'arrière ou latéralement, caractérisé par le fait que le dispositif de chauffage est disposé dans la région supérieure de la paroi arrière, l'ouverture d'entrée d'air étant réalisée sous la forme d'un raccordement d'entrée d'air sur le dispositif de chauffage, par le fait qu'un raccordement de sortie d'air est monté dans la région inférieure du séchoir en se dirigeant vers l'arrière ou latéralement, et par le fait que des modules supplémentaires qui peuvent être raccordés sont disposés entre le raccordement d'entrée d'air du dispositif de chauffage et le raccordement de sortie d'air.

2. Séchoir à linge selon la revendication 1, caractérisé par le fait qu'entre le bloc de chauffage (5) et le raccordement de sortie d'air (9) est interposé un module de recirculation (10) grâce auquel on peut faire varier le rapport entre l'air sortant et l'air entrant, et par le fait que ce dispositif de commande de l'air (11), est réalisé de façon à pouvoir être commandé de l'extérieur par voie manuelle ou, en fonction du traitement, par la commande du séchoir.

3. Séchoir à linge selon la revendication 1, caractérisé par le fait qu'entre le bloc de chauffage (5) et le raccordement de sortie d'air (9) est interposé un dispositif de condensation.

4. Séchoir à linge selon la revendication 1 ou 3, caractérisé par le fait qu'il est prévu comme dispositif de condensation un module de condensation d'air (12) comprenant un ventilateur a air froid intégré (16) et une sortie de condensat (15) ou un réservoir pour recueillir le condensat.

5. Séchoir à linge selon la revendication 1 et 3, caractérisé par le fait qu'il est prévu un module de condensation d'air comprenant une amenée d'eau pouvant être commandée, ainsi qu'une sortie pour l'eau et le condensat.

6. Séchoir à linge selon la revendication 1, caractérisé par le fait qu'entre le bloc de chauffage (5) et le raccordement de sortie d'air (9) est interposé un module de récupération de la chaleur (12) qui utilise pour l'air entrant la chaleur contenue dans l'air sortant.

7. Séchoir à linge selon la revendication 1 et 6, caractérisé par le fait qu'un dispositif de recirculation est intégré au module de récupération de la chaleur (12).

8. Séchoir à linge selon la revendication 1, caractérisé par le fait qu'entre le bloc de chauffage (5) et le raccordement de sortie d'air (9) est interposé un module de pompe à chaleur (20), et par le fait que le module de pompe à chaleur (20) comporte en outre une pompe à condensat.

9. Séchoir à linge selon l'une quelconque des revendications 1 à 8, caractérisé par le fait qu'une commande de passage d'air (24) est réalisée de façon à pouvoir être branchée sur les modules supplémentaires ou intégrée à ceux-ci, commande grâce à laquelle peut être réalisé le passage entre le fonctionnement en hiver et le fonctionnement en été, et par le fait que la commande de passage d'air (24) comprend des tubulures de raccordement (26, 26') pour l'entrée et la sortie d'air du séchoir à linge, une tubulure de raccordement d'air (25) conduisant à l'extérieur et au moins une tubulure de raccordement (27, 28) conduisant dans la pièce où le séchoir est installé.

10. Séchoir à linge selon l'une quelconque des revendications 1 à 9, caractérisé par le fait que le raccordement d'entrée d'air (8) qui est prévu sur le bloc de chauffage (5) est dirigé vers le bas, vers le côté ou vers l'arrière.

Fig.2

Fig.4

Fig.1

Fig.3

Fig. 5

Fig. 6